# EUROPEAN PATENT APPLICATION

(11) **EP 4 707 346 A1**
(43) Date of publication of application: **11.03.2026**
(21) Application number: 24199067.0
(22) Date of filing: 06.09.2024
(51) Int. Cl.: C09D 7/65, C09K 3/12, C10M 107/00, F16B 33/06, F16L 58/18, C08L 9/06, C08L 91/00, C09D 191/00

(54) **COATING FOR A THREADED CONNECTION**

(71) Applicant: Tenaris Connections B.V., 1019 GM Amsterdam (NL)
(72) Inventor: The designation of the inventor has not yet been filed
(74) Representative: Boult Wade Tennant LLP

(57) **Abstract**

A tubular member having a pin or box with a thread formed thereon for forming a threaded connection with another tubular member, wherein: the thread is coated with a coating, the coating comprises a polymeric matrix having particles of an elastomer dispersed therein; the elastomer has a tensile modulus at 100% of from 0.2 to 21 MPa; and the elastomer has a dynamic coefficient of friction of greater than 0.2.

## Description

The following describes a coating that may be applied to a tubular threaded connection for use in the oil and gas industry. The connection comprises a first tubular member having a pin and a second tubular member having a box. The pin and box carry opposing complementary threads so that the connection may be made-up by screwing the pin into the box. In most cases, as the pin is screwed into the box (a process known as make-up), interference between the threads increases, resulting in an increase in the torque required for further screwing of the pin into the box. It is known in the field to provide greases or coatings to the threads of a connection to provide lubrication for the make-up process, to assist with sealing the thread, or to protect the threads from corrosion during the period of storage before the connection is installed in a well.

The pin is an end portion of the first tubular member and comprises on its radially outward-facing surface a male thread. The box is an end portion of the second tubular member and comprises on its radially inward-facing surface a female thread. The male thread and female thread are configured to engage with each other when the joint is in a made-up state. The male thread and female thread often comprise a crest, a root, a load flank, and a stabbing flank.

There are two main types of threaded connections. Firstly, there is known a threaded connection having free-running threads (for example, API buttress threads), which are designed such that, when made-up, gaps remain between opposing stabbing flanks of the opposing threads. Secondly, there is known a threaded connection having self-locking threads (for example, self-locking threads with a varying thread width and often a dove-tail shape) which are designed such that, when made-up, there is interference between the opposing load and stabbing flanks.

There are various relevant torques when considering the performance of a threaded connection. Firstly, there is what is referred to as the make-up torque. This is the torque to be applied to the tubular member when making-up the threaded connection to a point at which the male and female tubular members are firmly engaged together. To provide a specified performance of the connection, the threaded connection has to be assembled to a make-up torque equal to a defined optimum make-up torque. The string of tubular members as a whole can be manoeuvred by compression and/or rotation in order to force it further along the well. In some cases, this manoeuvring may even force the string of tubular members to curve from a vertical path to a horizontal path. Consequently, the torque required to rotate the string of tubular members can exceed the make-up torque of the threaded connection. The highest relevant torque is the yield torque. This is the torque at which the connection is expected to exhibit extensive yielding failure owing to its material properties. Of course, it is desirable to avoid substantial yielding of the tubular members in use, either during the process of make-up, or following make-up when being manoeuvred within the well.

One performance measure of a threaded connection is its over-torque capacity. It is possible to quantify over-torque capacity numerically as the magnitude of the range above the optimum make-up torque in which the threaded connection can perform before reaching the yield torque.

Pipes used in the oil and gas industry are typically joined using threaded connections. Often the threads of the threaded connections are lubricated with grease to assist in the make-up of the threaded connection. Connections that have a metal-to-metal seal are excellent for gas production where fully tested gas-tight connections are required (the metal-to-metal seals are key to withstand very high pressures and reliably avoid leaks). Connections that do not have a metal-to-metal seal are usually intended only to seal against liquids (not gas). In such connections, the grease providing lubrication for the make-up process (also referred to as "dope") must provide sealability by filling the helical gap between the threads. There are some proprietary connections without metal-to-metal seal, which are designed to improve reliability, performance, and leak resistance, but can only seal against gas at low pressure. One problem with the use of grease is that, due to its tackiness, the grease can become contaminated, for example with dirt and dust, when the pipes are stored or inspected prior to make-up in the field. Furthermore, if too much grease is present, the over-torque capacity may be reduced.

The present invention seeks to tackle at least some of the problems associated with the prior art, or at least to provide a commercially acceptable alternative solution thereto.

In addition to greases, often referred to as thread compounds, there is a further form of coating, referred to as a solid coating. A solid coating is a coating over the thread or threads that may incorporate additives, such as for lubrication or corrosion resistance, that may set/cure fully or almost fully before use such that the coating does not flow significantly under pressures during the process of tightening of the threaded connection.

Furthermore, the concept of a semi-solid coating has been developed. This is a coating that can flow to some degree in order to fill gaps between the engaged tubular members. That is, a semi-solid coating can flow to fill gaps when under pressures during the process of tightening of the threaded connection.

The inventors have developed a semi-solid coating that overcomes many disadvantages of prior art coatings, as will be understood from the disclosure below.

In a first aspect, the present invention provides a tubular member having a pin or box with a thread formed thereon for forming a threaded connection with another tubular member, wherein:
the thread is coated with a coating;
the coating comprises a polymeric matrix having particles of an elastomer dispersed therein;
the elastomer has a tensile modulus at 100% of from 0.2 to 21 MPa; and
the elastomer has a dynamic coefficient of friction of greater than 0.2.

The term "elastomer" as used herein may encompass a polymer displaying rubber-like elasticity. Elastomers are typically amorphous polymers maintained above their glass transition temperature, so that considerable molecular reconfiguration is feasible without breaking of covalent bonds.

In a second aspect, the present invention provides a tubular member having a pin or box with a thread formed thereon, the thread being arranged for forming a threaded connection with another tubular member, wherein the thread is coated with a coating comprising a polymeric matrix having rubber particles dispersed therein.

The amount and location of coating may vary. The coated tubular member may be coated with the coating over the entirety of the pin or box, only the thread of the pin or box, or one or more portion of the thread.

A suitable thickness of coating may be in the range 0.01 mm to 3mm.

The coating of the first and second aspects is typically "semi-solid".

Preferably, a threaded connection comprises a first tubular member having a pin and a second tubular member having a box. The first tubular member and/or the second tubular member may be a coated tubular member in accordance with the first or second aspect.

The tubular members are preferably formed of steel.

The pin is an end portion of the first tubular member and comprises on its radially outward-facing surface a male thread. The box is an end portion of the second tubular member and comprises on its radially inward-facing surface a female thread.

The male thread and female thread are configured to engage with each other when the joint is in a made-up state.

Preferably the male and female threads are free-running threads or self-locking threads, in particular varying width threads, more in particular varying-width threads with a dove-tail shape. The male thread and female thread preferably comprise a crest, a root, a load flank, and a stabbing flank.

The pin and box may include features other than the male and female threads. For example, each of the pin and box may be provided with complementary torque shoulders, such that the torque shoulder on the pin contacts a corresponding torque shoulder on the box when the connection is made-up.

The pin and box may comprise complementary sealing surfaces arranged for radial interference when the connection is in the made-up state (that is, the complementary sealing surfaces collectively form a metal-to-metal seal), outside of the threaded region. That is, the pin may comprise on its radially outward-facing surface a male sealing surface, and the box may comprise on its radially inward-facing surface a female sealing surface.

Typically, such sealing surfaces are provided for improving the sealing ability of the threaded connection if the seal provided by the thread (the thread seal) is insufficient. However, such sealing surfaces increase cost and the time required for manufacture, and so it is preferable to not include these. Advantageously, the coating described herein can provide improved thread sealing to such a degree that metal-to-metal seals, outside of the threaded region, are not required. Indeed, the coating described herein can provide gas-tight thread sealing.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Without being bound by theory, it is considered that the elastomer/rubber particles may provide good sealing characteristics by bridging across thread gaps, thereby sealing small clearances in the connections when the elastomer/rubber particles are deformed by contact pressure. Moreover, the inventors have surprisingly found that coatings comprising a polymeric matrix having particles of the elastomer described herein, preferably rubber, dispersed therein can provide beneficial properties. In particular, such coatings can provide a high over torque capacity to a threaded connection, while also providing an improved thread seal.

Without wishing to be bound by theory, it is thought that the particular combination of properties (i.e. the combination of the tensile modulus and the dynamic coefficient of friction) of the elastomer, such as rubber, may contribute to the ability of the coating to provide a high over-torque capacity to a threaded connection, while also providing an improved thread seal. In particular, without wishing to be bound by theory, it is thought that, surprisingly, the high dynamic coefficient of friction of the elastomer, such as rubber, may contribute to the high over-torque capacity, while the low tensile modulus may contribute to the improved thread seal. That being said, while the high dynamic coefficient of friction provides the above advantages in the made-up state, the interaction of rubber particles with lubricants during make-up may reduce friction. Thus, at low contact pressures during the make-up of the connection, the lubricant may reduce the friction of the elastomer rubber particles, still allowing for good sliding with lower torques. In the made-up state, the elastomer/rubber particles may then contribute to the good sealing properties, while not affecting the lubrication regime since they may be deformed and pressed between the hard surfaces of the connection.

Preferably, the elastomer comprises a rubber, more preferably the elastomer is a rubber.

Preferably, the elastomer has a tensile modulus at 100% of from 1 to 15 MPa, preferably from 2 to 11 MPa. The tensile modulus may be measured, for example, using ASTM D412-16(2021). Preferably, the elastomer has a dynamic coefficient of friction of from 0.2 to 2, more preferably from 0.5 to 2, even more preferably from 0.6 to 2, still even more preferably from 0.7 to 1.5, still even more preferably from 0.8 to 1.2. The dynamic coefficient of friction may be measured, for example, using ASTM D1894-14(2014). Preferably, the elastomer has a tensile strength of from 1 to 28 MPa, preferably from 2 to 27 MPa, more preferably from 3 to 25 MPa. The tensile strength may be measured, for example, using ASTM D412-16(2021). Of course, it will be appreciated that each of the tensile modulus, dynamic coefficient of friction and tensile strength of the elastomer/rubber is an intrinsic property of the material *per se,* which can be measured by the methods described above, rather than the corresponding values that may be measured for the elastomer/rubber particles that are dispersed in the polymeric matrix. Without wishing to be bound by theory, it is thought that the particular combination of these parameters may assist in achieving the advantages described herein, such as providing coatings that can provide a high over-torque capacity to a threaded connection, while also providing an improved thread seal. Alternatively, as in the second aspect described herein, the present invention provides a tubular member having a pin or box with a thread formed thereon for forming a threaded connection with another tubular member, wherein the thread is coated, wherein the coating comprises a polymeric matrix having rubber particles dispersed therein.

The polymeric matrix may serve to keep the elastomer/rubber particles in position on the thread prior to make-up. In addition, the polymer matrix may protect the thread from corrosion prior to make-up. The polymeric matrix may comprise polymer. The polymeric matrix may contain species other than polymer, for example uncured / unpolymerized resins.

The elastomer/rubber particles may be regularly shaped or irregularly shaped but are preferably irregularly shaped. The term "irregularly shaped" as used herein may encompass shapes lacking symmetry.

The elastomer/rubber particles are dispersed in the polymeric matrix. The elastomer/rubber particles may be uniformly dispersed or non-uniformly dispersed but are typically uniformly dispersed. The term "dispersed" as used herein may encompass the situation where particles are generally distributed throughout the polymer matrix.

The elastomer/rubber preferably comprises one or more of ethylene propylene diene terpolymer (EPDM), polychloroprene, polyacrylates, fluoroelastomer, natural rubber, silicone rubber, synthetic polyisoprene rubber, polybutadiene rubber and styrene butadiene rubber, more preferably one or more of: natural rubber, silicone rubber, synthetic polyisoprene rubber, polybutadiene rubber and styrene butadiene rubber, preferably styrene butadiene rubber. Preferably, the elastomer/rubber comprises a cross-linked, preferably vulcanised, elastomer/rubber. More preferably, the elastomer/rubber is a cross-linked, preferably vulcanised, elastomer/rubber, such as a vulcanised styrene butadiene rubber, for example. Such rubbers may exhibit the favourable chemical and mechanical properties discussed above. Such rubbers are also low-cost and widely available.

The elastomer/rubber particles preferably comprise crumb rubber. The term "crumb rubber" as used herein may encompass recycled rubber produced from automotive and truck scrap tyres. During the recycling process, steel and tire cord (fluff) are removed, leaving tire rubber with a granular consistency. Continued processing with a granulator or cracker mill, possibly with the aid of cryogenics or by mechanical means, may reduce the size of the particles further. The particles may be sized, typically by passing through a screen. Since scrap tyres would typically otherwise be sent to landfill, the use of crumb rubber may render the coating more environmentally friendly. Furthermore, crumb rubber is low-cost and widely available.

The elastomer/rubber particles preferably have a particle size distribution comprising:
a D10 of 50 µm or more, preferably 100 µm or more, more preferably 125 µm or more, even more preferably 150 µm or more; and/or
a D90 of 750 µm or less, preferably 500 µm or less, more preferably 450 µm or less, even more preferably 425 µm or less.

Such a particle size distribution may be provided (and therefore measured) using sieves on a granulate of elastomer/rubber. The particle size may correspond to the longest dimension of the particle. When the particles are in the shape of spheres, the longest dimension may be the diameter of the sphere. Such D10 values may result in particularly favourable over-torque capacity and/or sealing. Such D90 values may enable the coating to be applied more easily since larger particles, particularly in large amounts, may clog the nozzles of typical equipment used to apply the coating to the tubular member. Such D90 values may also result in particularly favourable over-torque capacity, since larger particles may have a detrimental effect. The term "D10" as used herein may encompass the particle size at 10 % in the cumulative distribution on a volume basis. The term "D90" as used herein may encompass the particle size at 90 % in the cumulative distribution on a volume basis.

The coating preferably comprises from 1 to 20 wt.% of the elastomer/rubber particles, based on the total weight of the coating, more preferably from 2 to 15 wt.%, even more preferably from 4 to 10 wt.%. Lesser amounts of elastomer/rubber may not provide adequate over-torque capacity and/or sealing. Greater amounts of elastomer/rubber may result in certain disadvantages. For example, greater amounts of elastomer/rubber may make the coating harder to apply, and may affect the continuity (flaking off) of the polymeric matrix, thus affecting the corrosion protection. Greater amounts may also result in unfavourably high friction during assembly and/or lower over-torque capacity.

The polymeric matrix preferably comprises oxidatively cross-linked polyesters of fatty acids, preferably oxidatively cross-linked glycerol esters of fatty acids, more preferably oxidatively cross-linked glycerol esters of polyunsaturated fatty acids. Such species may result in the coating exhibiting low tackiness. In comparison to grease-based or dope-based lubricants used in the oil and gas industry, this may reduce the likelihood of contamination of the coating in the field prior to make-up, for example from dust and dirt. The term "oxidatively cross-linked" as used herein may encompass cross-links formed of a single oxygen atom, for example those formed as a result of autooxidation. The species may be partially cross-linked or fully cross-linked. In other words, the cross-linked species may be saturated or unsaturated, and/or may or may not comprise polymerizable functional groups. The term "fatty acid" as used herein may encompass a carboxylic acid with a saturated or unsaturated aliphatic chain comprising from 4 to 28 carbon atoms. The term "glycerol esters of fatty acids" as used herein may encompass triglycerides.

The coating preferably comprises from 5 to 20 wt.% of the oxidatively cross-linked polyesters of fatty acids based on the total weight of the coating, more preferably from 7 to 15 wt.%, even more preferably from 8 to 12 wt.%.

The polymeric matrix preferably comprises oxidatively cross-linked drying oil or oxidatively cross-linked alkyd, more preferably oxidatively cross-linked drying oil. Such species may result in the coating exhibiting low tackiness. The term "drying oil" as used herein may encompass a natural bio-based organic liquid comprising unsaturated long chain fatty acids capable of solidifying on exposure to air (to become cross-linked). Suitable drying oils may include, for example, linseed oil, tung oil, poppy seed oil, perilla oil, and walnut oil. The term "alkyd" as used herein may encompass synthetic polyester resin modified by the addition of fatty acids and other components. Alkyds are derived from polyols and organic acids including dicarboxylic acids or carboxylic acid anhydride and triglyceride oils. Alkyd resins are typically produced from dicarboxylic acids or anhydrides, such as phthalic anhydride or maleic anhydride, and polyols, such as
trimethylolpropane, glycerine, or pentaerythritol. The alkyd may be drying type or non-drying type but preferably is drying type.

The drying oil preferably comprises one or more of linseed oil, tung oil, poppy seed oil, perilla oil, and walnut oil. Such drying oils may be particularly effective at providing low tackiness.

The drying oil preferably comprises linseed stand oil. Linseed stand oil may be particularly effective at providing low tackiness. In addition, linseed stand oil may provide the coating with a favourable level of elasticity. Furthermore, linseed stand oil has suitable levels of viscosity, which provides a coating composition used to form the coating with a desirable level of viscosity to increase the ease of application of the coating composition to the tubular member. The term "linseed stand oil" as used herein may encompass oil generated by heating linseed oil near 300 °C for several days in the complete absence of air. Under these conditions, the polyunsaturated fatty esters convert to conjugated dienes, which then undergo Diels-Alder reactions, leading to crosslinking.

The coating preferably comprises from 5 to 20 wt.% of the oxidatively cross-linked drying oil or oxidatively cross-linked alkyd based on the total weight of the coating more preferably from 7 to 15 wt.%, even more preferably from 8 to 12 wt.%.

The coating preferably further comprises mineral oil dispersed in the polymeric matrix. This may help provide the coating with a favourable "semi-solid" consistency.

The mineral oil preferably comprises base oil (e.g. Group I, Group II, Group III, Group IV or Group V base oil), preferably Group I base oil. The term Group I base oil as used herein may encompass base stocks containing less than 90 percent saturates and/or greater than 0.03 percent sulfur and having a viscosity index greater than or equal to 80 and less than 120.

The coating preferably comprises from 3 to 17 wt.% mineral oil, based on the total weight of the coating, more preferably from 5 to 14 wt.%, even more preferably from 6 to 10 wt.%.

The coating preferably further comprises a detergent-based lubricant dispersed in the polymeric matrix. This may provide the coating with a favourable level of lubricity. This may enable make-up to be carried out more easily and/or with reduced likelihood of damage to the thread.

The coating preferably comprises from 10 to 45 wt.% of the detergent-based lubricant based on the total weight of the coating, more preferably from 11 to 40 wt.%, even more preferably from 12 to 35 wt.%, still more preferably from 13 to 30 wt.%, yet still more preferably from 18 to 28 wt.%.

The detergent-based lubricant preferably comprises an overbased detergent, preferably an overbased sulfonate. Such species may provide the coating with a favourable level of lubricity. Such species may inhibit corrosion of the tubular member. The term "detergent" as used herein may encompass metal salts of organic acids that act as surfactants that are active on surfaces. Detergents comprise a soap portion and a solid portion. The soap portion is an organic salt, for example a metal sulfonate or phenate or salicylate, typically ranging from 17-70 wt.%. The solid portion typically comprises metal carbonates, hydroxide or oxide and forms the source of the detergent's base, typically up to 50 wt.%. The detergent is preferably soluble in oil, for example, base oil or mineral oil. The term "overbased detergent" as used herein may encompass detergents prepared by reacting an acid with an excess amount of base in the presence of carbon dioxide (CO₂), forming metal carbonate. Overbased detergents typically have a high base number (BN) of from 50 to 650. The term "overbased sulfonate" as used herein may encompass a species having the general formula (RSO₃)ₐM_{b}(OH)_{c}(CO₃)_{d} where a, b, c and d represent moles of the different groups. M represents a metal and is preferably Ca. The structure of overbased sulfonates may comprise a spherical CaCOs core with a 1-10 nm radius surrounded by a shell containing a very small amount of unreacted Ca(OH)₂ and a water-repellent 1-5 nm monolayer of surfactant. Without being bound by theory, it is considered that lubricity is provided by the carbonate particles and the surfactant preventing direct contact between metal surfaces. Without being bound by theory, it is considered that corrosion inhibition is provided by the surfactant coating surfaces and displacing water, and by the carbonates and hydroxides neutralising acids.

The coating preferably comprises a binder comprising one or more of an epoxy resin (preferably a reaction product of epichlorohydrin and bisphenol-A), preferably in combination with cycloaliphatic amines; a C20-40 compound comprising a plurality of amine groups and a plurality of ester groups, such as Aspartic acid,N,N'-[methylenebis(2-methyl-4,1-cyclohexanediyl)]bis-, 1,1',4,4'-tetraethylester, preferably in combination with a C2-8 isocyanate, such as hexamethylene diisocyanate; a petroleum resin; a styrene acrylate polymer, such as a 30% styrene acrylate copolymer solution; and a urethane alkyd, preferably in linseed oil, more preferably a 50% (medium) urethane alkyd in linseed oil solution. The coating preferably comprises from 5 to 40 wt.% of the binder based on the total weight of the coating, more preferably from 10 to 20 wt.%.

In an alternative preferred embodiment (i.e. as an alternative to the use of the preferred binders above), the coating preferably further comprises petroleum resin (e.g. C5 resin, C5/C9 resin, C9 resin), more preferably petroleum C9 resin. The presence of petroleum resin may increase the adherence of the coating to the tubular member thread. This may ensure that the coating remains on the thread before, during and after make-up. The term "petroleum resin" as used herein may encompass a low molecular weight (typically about *M* _{w} 500-5,000) thermoplastic hydrocarbon resins derived from cracked petroleum fractions. Petroleum resins are distinguished from high polymers such as polystyrene and polypropylene, which are pure-monomer-based resins essentially made from pure starting materials such as styrene and propylene, respectively. C9 petroleum resin may produced from aromatic crackers such as, for example, vinyltoluenes, Indene, alphamethylstyrene, styrene and methylidenes.

The coating preferably comprises from 5 to 20 wt.% of the petroleum resin based on the total weight of the coating, more preferably from 7 to 15 wt.%, even more preferably from 8 to 12 wt.%.

The coating preferably further comprises copper particles dispersed in the polymeric matrix, more preferably wherein the copper particles comprise copper flakes. This may provide the coating with particularly favourable anti-galling properties. In particular, such species may make a smooth sliding path preventing galling by preventing both metal parts (pin and box) to be in direct contact with each other. Such species may also provide the coating with particularly favourable lubricity and/or greater over-torque capacity. In addition, such species may contribute to forming a robust seal following make-up, typically a gas-tight seal. Without being bound by theory, it is considered that the copper particles may contribute to the gas-tightness by filling in gaps between threads, acting as "damming particles". Such gas-tightness provided by the coating may be sufficient to omit other means of achieving gas-tightness such as, for example, having a metal-metal contact between the pin and box.

The coating preferably comprises from 1 to 20 wt.% copper particles based on the total weight of the coating, more preferably from 5 to 15 wt.% copper particles.

The copper particles preferably exhibit a particle size distribution comprising:
a D10 of from 5 to 15 µm; and/or
a D50 of from 20 to 40 µm; and/or
a D90 of from 100 to 140 µm.

Such a particle size distribution may provide the coating with particularly favourable sealing characteristics. As discussed above, without being bound by theory, it is considered that the elastomer/rubber particles may provide good sealing characteristics by bridging across thread gaps. Such a particle size distribution of the copper particles may enable the copper particles to plug any remaining gaps. The D10, D50 and D90 may be measured, for example, on a volume basis using a laser diffraction method, specifically one employing Mie theory. The measurement may be carried out, for example, using a Mastersizer 2000 instrument available from Malvern Panalytical. The term "D50" as used herein may encompass the particle size at 50 % in the cumulative distribution on a volume basis. The D50 may also be referred to as the median.

The coating preferably further comprises talc dispersed in the polymeric matrix. The presence of talc may improve the anti-galling properties, lubricity and/or seal characteristics for similar reasons to copper particles. In addition, when used in combination with copper particles, talc may prevent or reduce the occurrence of adhesion (cold welding) of copper particles to the tubular member wall. Accordingly, the coating preferably comprises both copper particles and talc.

The coating preferably comprises from 1 to 10 wt.% talc based on the total weight of the coating, more preferably from 3 to 8 wt.%.

The talc preferably exhibits a particle size distribution comprising:
a D10 of from 1 to 5 µm; and/or
a D50 of from 5 to 10 µm; and/or
a D90 of from 15 to 25 µm.

This may enable the talc to plug any remaining gaps, as discussed above in relation to copper particles. The D10, D50 and D90 may be measured, for example, on a volume basis using a laser diffraction method, specifically one employing Mie theory.

The coating preferably further comprises graphite particles dispersed in the polymeric matrix. The graphite preferably comprises natural graphite. Advantageously, graphite may act as a dry lubricant. The presence of graphite particles may improve the anti-galling properties, lubricity and/or seal characteristics for similar reasons to copper particles and talc. This is particularly the case at high contact pressures.

The coating preferably further comprises both copper particles and graphite particles dispersed in the polymeric matrix. This may result in particularly favourable over-torque capacity.

The coating preferably comprises from 1 to 20 wt.% of the graphite particles based on the total weight of the coating, more preferably from 5 to 15 wt.% or the graphite particles. Lower levels of graphite may result in only a moderate improvement in the anti-galling properties, lubricity and/or seal characteristics. Higher levels of graphite may actually reduce the over-torque capacity.

The graphite particles exhibit preferably a particle size distribution comprising:
a D10 of from 2 to 12 µm; and/or
a D50 of from 35 to 55 µm; and/or
a D90 of from 90 to 120 µm.

This may enable the graphite particles to plug any remaining gaps, as discussed above in relation to copper particles and talc. The D10, D50 and D90 may be measured, for example, on a volume basis using a laser diffraction method, specifically one employing Mie theory.

The coating preferably further comprises calcium carbonate. Calcium carbonate may act as a solid lubricant. The presence of calcium carbonate may reduce the occurrence of high temperatures during make-up caused by excessive friction, and may therefore assist in achieving a desired torque without reaching undesirably high temperatures. Such high temperatures may present a risk for personnel health and may produce unwanted changes in the coating.

The coating preferably comprises from 1 to 7 wt.% of the calcium carbonate, preferably from 2 to 6 wt.%.

The calcium carbonate particles preferably exhibit a particle size distribution comprising:
a D10 of from 0.1 to 3 µm; and/or
a D50 of from 4 to 10 µm; and/or
a D90 of from 11 to 20 µm.

This may enable the calcium carbonate particles to fill in any remaining gaps, as discussed above in relation to copper particles, talc and graphite. The D10, D50 and D90 may be measured, for example, on a volume basis using a laser diffraction method, specifically one employing Mie theory.

The coating preferably further comprises:
calcium sulfate, preferably from 0.1 to 2 wt.% calcium sulfate based on the total weight of the coating, more preferably from 0.4 to 1.2 wt.%; and/or
titanium dioxide, preferably from 0.1 to 1 wt.% titanium dioxide based on the total weight of the coating, more preferably from 0.2 to 0.7 wt.%; and/or
an antioxidant (preferably an aromatic secondary aminic antioxidant, e.g. octyl 3-[3,5-di(t-butyl)-4- hydroxyphenyljpropanoate), preferably from 0.1 to 1.5 wt.% of the antioxidant based on the total weight of the coating; and/or
an anticorrosive agent (preferably a metal sarcosinate / sulfonate / carboxylate or N-oleoylsarcosine, or imidazolium or imidazolium halide anticorrosive agent, e.g. magnesium dinonylnaphthalenesulfonate/carboxylate), preferably from 0.4 to 1 wt.% of the anticorrosive agent based on the total weight of the coating; and/or
a wax-based lubricant, preferably microcrystalline wax, preferably from 2 to 10 wt.% wax-based lubricant.

The presence of the wax-based lubricant may contribute to the corrosion protection.

In a further aspect, the present invention provides a coating composition for coating a thread of a tubular member, the coating composition comprising:
particles of an elastomer, wherein the elastomer has a tensile modulus at 100% of from 0.2 to 21 MPa and a dynamic coefficient of friction of greater than 0.2;
monomers;
drying agent;
mineral oil; and
solvent.

The advantages and preferable features of the first or second aspect apply equally to this aspect.

The coating composition may be used to manufacture the coating of the first or second aspect.

In a further aspect, the present invention provides a coating composition for coating a tubular member thread, the coating composition comprising:
rubber particles;
monomers;
drying agent;
mineral oil; and
solvent.

The advantages and preferable features of the first or second aspect apply equally to this aspect.

The coating composition may be used to manufacture the coating of the first or second aspect.

The components of the composition are dissolved in or suspended in the solvent. The presence of solvent may provide the composition with a viscosity suitable for the composition to be applied to the threads using conventional application techniques such as, for example, brushing, spraying and dipping. The solvent preferably has a boiling point (or, if having a boiling range, the upper limit of the boiling range) of less than 250 °C, preferably less than 210 °C, even more preferably less than 205 °C. This may enable solvent to be evaporated from the composition at ambient, or only slightly elevated temperatures. Accordingly, the composition may have a lower viscosity at the point of application, and then an increasingly higher viscosity thereafter. The solvent preferably has a boiling point (or, if having a boiling range, the lower limit of the boiling range) of greater than 100 °C, more preferably greater than 120 °C, even more preferably greater than 140 °C. This may reduce the chances of significant amounts of solvent evaporating prematurely at ambient temperature before the application of the composition to the thread is complete.

The monomers preferably comprise oxidatively cross-linkable monomers, i.e. monomers capable of undergoing autooxidation. This may enable curing of the composition in air, thereby simplifying a method of manufacture of the coating.

The term "drying agent" as used herein may encompass a coordination compound that accelerates (catalyzes) the hardening / curing of monomers. For example, in the case of autooxidation of a drying oil, the drying agent may speed up reduction of the hydroperoxide intermediate. This may mean that the composition can be dried / cured more quickly and/or at lower temperatures. Drying agents are sometimes referred to as siccatives.

The elastomer/rubber preferably comprises one or more of: natural rubber, synthetic polyisoprene, polybutadiene rubber and styrene butadiene rubber, preferably styrene butadiene rubber.

The monomers preferably comprise glycerol esters of polyunsaturated fatty acids, more preferably having an iodine value of at least 115, even more preferably at least 120, still even more preferably at least 125, still even more preferably at least 130. The monomers preferably comprise drying oil and/or alkyd.

The drying agent preferably comprises metal octoate, more preferably one or more of manganese octoate, zirconium octoate, calcium octoate and cobalt octoate, even more preferably all three of zirconium octoate, calcium octoate and cobalt octoate. Such drying agents are particularly effective at accelerating curing of the monomers, in particular the specific monomers discussed above.

The mineral oil preferably comprises base oil, more preferably Group I base oil.

The solvent preferably comprises white spirit, more preferably Stoddard solvent. Such solvents are particularly effective at dissolving or suspending the other components of the composition. In addition, such solvents may exhibit the favourable boiling points discussed above. The term "white spirit" as used herein may encompass a mixture of aliphatic, open-chain or alicyclic C₇ to C₁₂ hydrocarbons. The white spirit is preferably type 1, i.e. it has been subjected to hydrodesulfurization. The Stoddard solvent typically comprises over 65 vol.% C₁₀ or higher hydrocarbons. The solvent may further comprise a C2-6 ester such as ethyl acetate.

The coating composition preferably comprises:
from 1 to 20 wt.% of the elastomer/rubber particles, based on the total weight of the composition, preferably from 2 to 15 wt.%, more preferably from 4 to 10 wt.%:
from 5 to 25 wt.% of the monomers, based on the total weight of the composition, preferably from 10 to 20 wt.%; and/or
from 0.1 to 1.5 wt.% of the drying agent, based on the total weight of the composition, preferably from 0.4 to 0.8 wt.%; and/or
from 5 to 25 wt.% mineral oil, based on the total weight of the composition, preferably from 8 to 20 wt.%, more preferably from 10 to 15 wt.%; and/or
from 2 to 30 wt.% of the solvent, based on the total weight of the composition, preferably from 5 to 25 wt.%, more preferably from 10 to 20 wt.%.

The coating composition preferably further comprises one or more of:
copper particles, preferably from 1 to 20 wt.% copper particles based on the total weight of the composition, more preferably from 5 to 15 wt.% copper particles;
talc, preferably from 1 to 10 wt.% talc based on the total weight of the composition, more preferably from 2 to 6 wt.%;
graphite particles, preferably from 1 to 20 wt.% graphite particles based on the total weight of the composition, more preferably from 5 to 15 wt.% graphite particles;
an anticorrosive agent (preferably a metal sarcosinate / sulfonate / carboxylate or N-oleoylsarcosine, or imidazolium or imidazolium halide anticorrosive agent, e.g. magnesium dinonylnaphthalenesulfonate/carboxylate), preferably from 0.2 to 1 wt.% anticorrosive agent based on the total weight of the composition;
an antioxidant (preferably an aromatic secondary aminic antioxidant, e.g. octyl 3-[3,5-di(t-butyl)-4- hydroxyphenyljpropanoate), preferably from 0.1 to 0.5 wt.% antioxidant based on the total weight of the composition;
a detergent based lubricant, preferably an overbased sulfonate, preferably from 15 to 25 wt.% detergent-based lubricant, based on the total weight of the composition, more preferably from 20 to 30 wt.%; and
a wax-based lubricant, preferably microcrystalline paraffin, preferably from 2 to 10 wt.% wax-based lubricant based on the total weight of the composition.

In a further aspect, the present invention provides a tubular member having a pin or box with a thread formed thereon, the thread being arranged for forming a threaded connection with another tubular member, wherein the thread is coated with the coating composition described herein disposed thereon.

The advantages and preferable features of the first or second aspect apply equally to this aspect.

In a further aspect, the present invention provides a method of manufacturing the tubular member described herein, the method comprising:
providing a tubular member having a thread;
providing a coating by disposing the coating composition described herein on the thread; and
exposing the coating to an oxygen-containing atmosphere, preferably air.

The advantages and preferable features of the first or second aspect apply equally to this aspect.

On exposure to air, monomers in the composition may start to cross-link. This may increase the viscosity of the coating. This may ensure that the coating stays in a desired position on the thread. It may also result in the coating exhibiting a low tackiness.

The disposing may comprise, for example, one or more of brushing, spraying and dipping.

The method comprises exposing the disposed composition to an oxygen-containing atmosphere, preferably air. This may cause the monomers to polymerise, typically by autooxidation. The length of exposure required to achieve a desired level of polymerisation / curing will depend on the identities and amounts of, for example, the monomers and drying agents. Typically, the length of exposure will vary from a few hours to a few days. Advantageously, the coating composition is typically capable of curing at room temperature. While curing and solvent evaporation may be accelerated by heating the disposed composition, for example, to a temperature of greater than 20 °C, preferably greater than 30 °C, this is not necessary and may increase the cost of the method. The temperature is preferably less than 100 °C, more preferably less than 80 °C. This may reduce the occurrence of damage and/or decomposition of components of the composition.

In a further aspect, the present invention provides a tubular member manufactured according to the method described herein.

The advantages and preferable features of the first or second aspect apply equally to this aspect.

### Drawings

For a better understanding of the invention, and to show how the same may be put into effect, reference will now be made, by way of example only, to the accompanying drawings in which:
Figure 1 shows half of a cross-section of an embodiment of a threaded connection having a varying-width thread coated with a coating (not shown) in accordance with the invention;
Figure 2 shows a close-up view of the varying-width thread of Figure 1;
Figure 3 shows a graph of torque v. turns, comparing the coating of the invention with a commercially available product in a condition in which the optimum amount of coating has been applied; and
Figure 4 shows a graph of torque v. turns, comparing the coating of the invention with a commercially available product in a condition in which a large excess amount of coating has been applied.

### Detailed description

A first embodiment of a threaded connection comprises a pin 100 formed on the end of a first tubular member 1 and a box 200 formed on the end of a second tubular member 2.

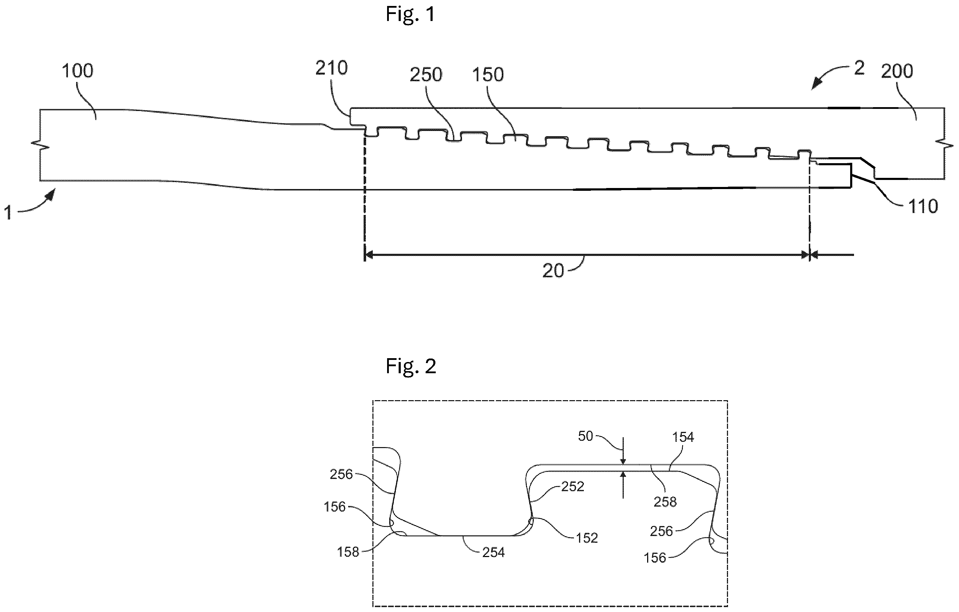

The male thread 150 and female thread 250 are configured to engage with each other when the connection is in a made-up state. As can be seen Figure 1, the threads are preferably tapered.

The pin 100 has a male thread 150 formed thereon. The box 200 has a female thread 250 formed thereon. The male and female threads 150, 250 are complementary, and so are arranged for engagement in the manner depicted.

In this embodiment the threads 150, 250 are varying-width threads, for example, arranged for self-locking. Varying-width threads increase in thread width from the terminal surface of the respective tubular member 1, 2 towards the body of that tubular member 1, 2. As a result, as the threaded connection is made-up, the gaps between the load flanks 152, 252, and the gaps between the stabbing flanks 156, 256 reduce until there is contact, following which there is interference between the opposing flank surfaces 152, 252, 156, 256.

At least one of the male and female threads 150, 250 is/are coated with the coating described above (not shown). Preferably, both of the threads 150, 250 are coated, since this will have provided corrosion protection in the period of storage prior to use.

Preferably, if a single thread 150, 250 is coated, then the thickness of the coating is in the range 0.02mm to 6mm. If both threads 150, 250 are coated then the thickness of each of those coatings is in the range 0.01 mm to 3mm. It has been recognised that the beneficial effects of the coating with respect to torque behaviour and sealing are less sensitive to the total amount of coating provided than conventional greases, and so these figures are merely illustrative and not essential.

The pin 100 and box 200 may include features other than the male and female threads 150, 250. For example, each of the pin and box may be provided with complementary torque shoulders or complementary sealing surfaces.

However, it is preferable in this embodiment that no torque shoulder is provided, since the varying-width threads 150, 250, through their mutual engagement, provide sufficient torque for make-up.

It is preferable in this embodiment that no complementary sealing surfaces (that is, surfaces formed as annular conical, or annular rounded surfaces for creating a metal-to-metal seal) are provided in addition to the thread seal, since the coating provides sufficient thread sealing, and can even provide a gas-tight thread seal. Conventional coatings referred to as solid coatings are not used in threaded connections without complementary sealing surfaces, because these coatings are unable to form a thread seal (solid coatings cannot flow to fill gaps in the thread, and so metal-to-metal seals are needed for effective sealing). Conventionally, grease would be used for sealing connections without metal-to-metal seals.

As can be seen in Figure 2, the male thread and female thread 150, 250 preferably comprise a crest 154, 254, a root 158, 258, a load flank 152, 252, and a stabbing flank 156, 256.

When the threads 150, 250 are made-up, there is interference at the load flanks 152, 252 and stabbing flanks 156, 256.

As shown in Figure 2, there may be deliberate a clearance 50 between the threads, for example, between the crest 154 of the male thread 150 and root 258 of the female thread 250. Moreover, there may be inadvertent clearances between the threads, for example, if a chamfer or bevel is provided (one is shown on the crest D5 for of the female thread 250 near the load flank 256), or due to the difference between the curvature of the corners of the threads 150, 250 (for example a gap can be seen where the load flank 152 of the male thread 150 meets the root 158 of the male thread 150). Further, there may be clearances between the threads (not shown) owing to inaccuracies of the manufacturing process, such as vibrations of the cutting tool during manufacture.

Irrespective of the cause of the clearances between the threads (whether this is provided by design or by manufacturing inaccuracies), the purpose of the coating is to fill the gaps between the threads 150, 250.

During the initial stages of make-up of a varying-width thread, there are clearances between the load flanks 152, 252 and between the stabbing flanks 156, 256. This is because at the early stages of screwing the threads 150, 250 together, the narrower-width portions of the male thread 150 are inserted between the narrower-width portions of the female thread 250. At this point, the coating will be largely unchanged as compared to its original distribution after initial application. However, as the threads 150, 250 are made-up, the distance between opposing load flanks 152, 252 and stabbing flanks 156, 256 decreases, reducing the available space for the coating. Accordingly, the coating is squeezed between the surfaces as they get closer during the make-up process, up to the point when the load flanks 152, 252 and stabbing flanks 146, 256 contact one another (and are subsequently forced together to produce interference).

When the threads 150, 250 are arranged along a taper, with the radius mid-point of the thread 150, 250 reducing along its length, there is also a reduction in volume available for the coating between the roots 158, 258 and crests 154, 254 of the threads 150, 250. This is because the early stages of screwing the portion of the pin 150 with a smaller radius engages the portion of the box 250 with a larger radius. As the threads 150, 250 are made-up, the radial space between the threads 150, 250 diminishes, since the portion of the pin 150 with a smaller radius approaches engages portions of the box 250 with increasingly reduced radius. As such, any clearance 50 between the roots 158, 258 and crests 154, 254 will reduce over the make-up process to a minimum value (if a clearance is deliberately provided) or to the point in which the roots 158, 258 and crests 154, 254 contact.

Because of the properties of the polymer matrix, the coating, under pressure caused by the increasingly close engagement of the threads 150, 250, the flows along the available helical space to fill gaps between the threads 150, 250 (it may be that in practice not all of the gaps are filled, but the intention is to fill as much of the space between the tubular components as possible).

Owing to the variety of possible clearances between the threads 150, 250 of a threaded connection, there are a variety of gaps that may be provided. There may be relatively large gaps such as the clearance 50. There may be relatively small gaps such as the gap between the load flank 152 and root 158 of the male thread 150. There may be relatively very small gaps (not visible in Figure 2) such as gaps between abutting surfaces (e.g., between load flanks 152, 252 and between stabbing flanks 156, 256), resulting from manufacturing inaccuracies.

It has been found that the use of elastomer/rubber particles in the coating provides a sealing ability that is effective independently of the type of gap.

Without wishing to be bound by theory, it is hypothesised that the large elastomer/rubber particles are able to effectively fill large volumes. Owing to the deformability of the elastomer/rubber particles, they are able to maintain their sealing ability when compressed into very small volumes.

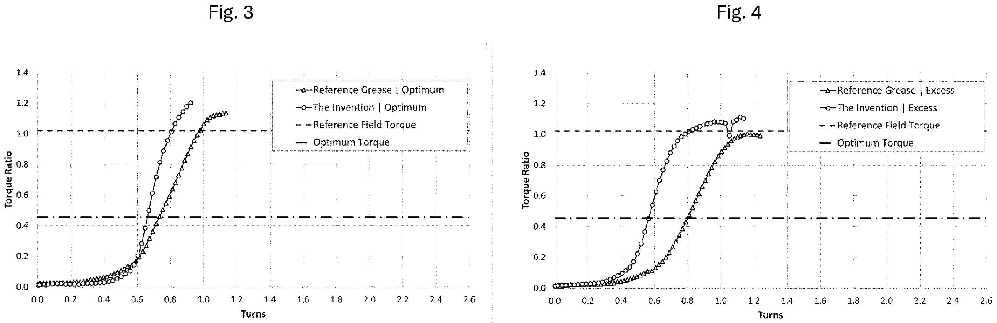

It is known to use large particles as additives to assist with the sealing of large clearances in threads. However, large particles can disrupt the desired torque characteristics of the connection during the process of make-up. This is discussed further below in connection with Figure 3.

The use of elastomer/rubber particles can desirably achieve the beneficial sealing effects described above, without inadvertently disrupting the desired torque characteristics of the connection during make-up.

Again, without wishing to be bound by theory, it is hypothesised that the elastomer/rubber particles, when compressed between approaching surfaces (such as between the load flanks 152, 252 and between the stabbing flanks 156, 256), provide increased friction. Friction is unwanted at the early stages of make-up, since it is desirable to reduce the galling of the surfaces of the pin 100 and box 200. Avoiding galling enables the pin 100 and box 200 to be reused over multiple make-up and break-out cycles. However, friction is desirable at the end of the make-up process so that the tubular members one, two may be tightly engaged. Since the elastomer/rubber particles provide increased friction as the pin 100 and box 200 are tightened together. That is, the elastomer/rubber particles, when compressed, advantageously increase the torque required to further tighten the connection . In contrast, when large particles of conventional lubricant are used, those particles may contribute to similar sealing effects, but provide reduced friction as the pin 100 and box 200 are tightened together, and so are deleterious to the torque characteristics of the connection during make-up.

Although this benefit is useful in all types of that threaded connection, this is of particular importance in the context of a varying-width thread, since it is the thread itself the provides the greatest contribution to the make-up torque.

Whereas Figures 1 and 2 depict a threaded connection having a varying-width thread and no torque shoulder, the coating is also generally applicable to all other forms of threaded connection.

For example, the coating may be applied to a connection with free-running or varying-width threads, with or without torque shoulders, and with or without metal-to-metal seals.

In particular, the coating has beneficial effects when used in combination with a thread that provides a clearance between opposing stabbing flanks when made-up. Typically, such a connection will involve a torque shoulder and a buttress thread (for example, and API buttress thread), with the make-up torque generated by interference at the torque shoulder and load flank of the connection. In addition to the clearance between opposing stabbing flanks, there may be a clearance between one or both of the male thread crest and female thread root and/or the male thread root and female thread crest. The root/crest clearance(s) is/are contiguous with the stabbing flanks clearance, so as to form a helical gap of significant volume. The use of the elastomer/rubber particles is advantageous in this context, since the connection exhibits large volumes that require sealing (i.e. at the stabbing flanks) and has interfering surfaces (i.e. at the load flanks).

An embodiment of the method of producing a coated tubular member for a threaded connection, comprises: providing a tubular member; cutting a thread onto at least one end portion of the tubular member; coating the thread with the coating described above.

This method may be carried out in a single factory/mill.

The method may further comprises enclosing the coated thread with a thread protector. This additional step may also be carried out in the factory/mill.

A thread protector is a cap or container designed to fit over the thread, in particular over a pin (it may have a complementary thread to engage with the thread on the pin), to protect the pin from the environment during transport and/or storage. The coating may fill any gaps between the thread and the thread protector to prevent ingress of water.

It has been found that the above-described coating has corrosion-inhibiting properties that are suitable for protecting the thread from corrosion during periods of storage between manufacture and use. This is advantageous as compared with the conventional approach of providing corrosion protection to the thread in the factory and, separate, lubrication on-location shortly before make-up. In other words, the above-described coating is a multi-use coating that protects the thread during storage, improves the torque characteristics of the thread during make-up and seals the thread during use of the threaded connection.

Optionally, the first tubular member 1 may have a pin 100 at each end, and the second tubular member 2 may be a coupling, i.e. a shorter member, having a box 200 at each end.

In which case, it is envisaged that the coating may be applied to both pins 100 of the first tubular member 1, with a coupling being attached to one of the pins 100 within the factory/mill. A thread protector may be applied to the other of the pins 100 within the factory/mill.

The environment of a factory/mill is a controlled, generally clean one. Typically, however, tubular members are stored outside, perhaps on-site near a well, where the conditions may be dusty or dirty. Even when thread protectors are provided, such conditions can cause dirt to accumulate on the thread. For example, this may result from the inspection of the threads during storage.

Prior art coatings are generally tacky, and so it is undesirable to apply the coating in the factory/mill, since this would lead to the adherence of dust/dirt to the thread. The presence of dust/dirt on the thread at the time of make-up can lead to galling or incorrect engagement of the threaded tubular members 1, 2.

However, as discussed above, the thread of the above-described coating has desirably low tackiness. As such, the above-described coating may be applied in the factory/mill without concern that dust/that would adhere to the thread.

Figure 3 shows a comparison of the above-described coating with a commercially available product.

Figure 3 shows a graph of torque vs. turns for the make-up of a threaded connection without a metal-to-metal seal under two conditions. The first condition is the use of a commercially available grease product to coat the thread. The second condition is the use of the coating described in the example below to coat thread. In each condition, the optimum amount of coating was used.

As can be seen from Figure 3, the example coating exhibited better torque behaviour then the commercially available grease product.

The graphs 3 and 4 also highlight two torque values. The lowest torque value is the optimum make-up torque, which is the torque to be applied to the tubular member when making up the threaded connection. The other is the reference field torque, which is defined as the minimum torque that a connection should be able to sustain when string rotation is required.

In particular, it can be seen that the connection having the example coating, above the optimum make-up torque approaches the reference field torque in Figure 3 without any significant plastic deformation. As such, because of the higher yield torque achieved, the over-torque capacity of a threaded connection having the above-described coating is advantageous, as compared with the commercially available grease product.

As mentioned above, the coating may be applied to one or both of the pin and box. Example thicknesses of coating have been given above. However, these are merely examples, since the amount of coating is not crucial to achieving its beneficial effects.

In fact, it is advantageous that the coating behaviour is less sensitive to the amount of coating provided, since this enables the coating to be applied inaccurately (for example, using a simple brush) and so avoids the need for careful application of the coating. Without wishing to be bound by theory, it is hypothesised that the use of the elastomer/rubber particles, because of their deformability, and ability to migrate under compression during make-up, removes the sensitivity to amount of coating that would be present if inelastic large particles were present in the coating.

The robustness of the coating to the amount applied is depicted in Figure 4. Figure 4 shows a graph of torque vs. turns for the make-up of a connection under two conditions. The first condition is the use of a commercially available grease product to coat the thread. In this first condition, an excess volume of the commercially available product was applied. The second condition is the use of the coating described in the example below to coat thread. In the second condition, an excess volume of the example coating was applied.

As can be seen from Figure 4, the torque behaviour of the example coating was considerably less affected by the application of an excess volume than the commercially available grease product. In fact, it has been found that the example coating can provide suitable performance at levels of as much as three times as much volume as the conventional grease. Under commercial conditions, it is considered reasonably difficult to control the amount of grease/coating, which may result in an unintended excess.

However, despite the application of an excess volume of coating, a threaded connection having the example coating, when working above the optimum make-up torque, was able to approach the reference field torque while exhibiting only a little or no plastic deformation. This is in contrast with the commercially available grease product, wherein the connections exhibited plastic deformation prior to reaching the reference field torque.

### Examples

The invention will now be further described by reference to the following examples.

A number of mixtures were prepared having the following compositions:

### Mixture 1

| **Component** | **%** | **Role** |
|---|---|---|
| Mineral oil (group 1) | 11.88 | Lubricant |
| Overbased calcium sulfonate | 25.71 | Lubricant/anticorrosion/ thickener |
| Epoxy resin: reaction product of epichlorohydrin and bisphenol-A. | 18.70 | Fast drying binder |
| cycloaliphatic amines | 9.30 | |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Stoddard solvent | 32.91 | Solvent |

### Mixture 2

| **Component** | **%** | **Role** |
|---|---|---|
| Mineral oil (group 1) | 11.88 | Lubricant |
| Overbased calcium sulfonate | 25.71 | Lubricant/anticorrosion/thickener |
| Epoxy resin: reaction product of epichlorohydrin and bisphenol-A. | 11.22 | Fast drying binder |
| cycloaliphatic amines | 5.58 | |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Stoddard solvent | 44.11 | Solvent |

### Mixture 3

| **Component** | **%** | **Role** |
|---|---|---|
| Mineral oil (group 1) | 13.35 | Lubricant |
| Overbased calcium sulfonate | 24.24 | Lubricant/anticorrosion |
| Petroleµm resin C9 | 28.00 (1:1) | Binder |
| Linseed Stand Oil | | Binder / monomers |
| Microcrystalline paraffin | 9.00 | Lubricant, anticorrosión, thickener |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Zirconium Octoate 24% | 0.35 | Drying agent |
| Calcium Octoate 6% | 0.42 | Drying agent |
| Cobalt Octoate 6% | 0.14 | Drying agent |
| Stoddard solvent | 23.00 | Solvent |

### Mixture 4

| **Component** | **%** | **Role** |
|---|---|---|
| Mineral oil (group 1) | 11.88 | Lubricant |
| Overbased calcium sulfonate | 25.71 | Lubricant/anticorrosion/thickener |
| Aspartic acid,N,N'-[methylenebis(2-methyl-4,1-cyclohexanediyl)]bis-, 1,1',4,4'-tetraethylester- Comp A | 9.00 | Fast drying binder |
| Hexamethylene diisocyanate, oligomers. Comp B | 7.00 | |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Stoddard solvent | 44.91 | Solvent |

### Mixture 5

| **Component** | **%** | **Role** |
|---|---|---|
| Mineral oil (group 1) | 11.88 | Lubricant |
| Overbased calcium sulfonate | 25.71 | Lubricant/anticorrosion/thickener |
| 30% styrene acrylate copolymer solution | 56.00 | Fast drying binder |
| Magnesium dinonylnaphthalenesulfonate/carboxylate | 1.0 | Anticorrosive |
| Octyl 3-[3,5-di(t-butyl)-4-hydroxyphenyl]propanoate | 0.50 | Antioxidant |
| Stoddard solvent | 4.91 | Solvent |

### Mixture 6

| **Component** | **%** | **Role** |
|---|---|---|
| Mineral oil (group 1) | 11.88 | Lubricant |
| Overbased calcium sulfonate | 25.71 | Lubricant/anticorrosion/thickener |
| 30% styrene acrylate copolymer solution | 33.08 | Fast drying binder |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Stoddard solvent | 27.83 | Solvent |

### Mixture 7

| **Component** | **%** | **Role** |
|---|---|---|
| Mineral oil (group 1) | 11.88 | Lubricant |
| Overbased calcium sulfonate | 25.71 | Lubricant/anticorrosion/thickener |
| 50 % Medium urethane alkyd in linseed oil solution | 33.54 | Fast drying binder |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| 6 % Manganese octoate | 0.06 | Drying agent |
| Stoddard solvent | 27.25 | Solvent |

### Mixture 8

| **Component** | **%** | **Role** |
|---|---|---|
| Mineral oil (group 1) | 11.88 | Lubricant |
| Overbased calcium sulfonate | 25.71 | Lubricant/anticorrosion/ thickener |
| 50 % Medium urethane alkyd in linseed oil solution | 31.18 | Fast drying binder |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Ethyl acetate | 14.86 | Solvent |
| Stoddard solvent | 14.87 | Solvent |

### Mixture 9

| **Component** | **%** | **Role** |
|---|---|---|
| Mineral oil (group 1) | 16.8 0 | Lubricant |
| Overbased calcium sulfonate | 36.3 7 | Lubricant/anticorrosion/ thickener |
| 50 % Medium urethane alkyd in linseed oil solution | 15.5 9 | Fast drying binder |
| Magnesium dinonylnaphthalenesulfonate/carboxylat e | 1.00 | Anticorrosive |
| Octyl 3-[3,5-di(t-butyl)-4-hydroxyphenyl]propanoate | 0.50 | Antioxidant |
| Ethyl acetate | 14.8 7 | Solvent |
| Stoddard solvent | 14.8 7 | Solvent |

### Mixture 10

| **Component** | **%** | **Role** |
|---|---|---|
| Mineral oil (group 1) | 19.2 7 | Lubricant |
| Overbased calcium sulfonate | 41.7 0 | Lubricant/anticorrosion/thickener |
| 50 % Medium urethane alkyd in linseed oil solution | 7.80 | Fast drying binder |
| Magnesium dinonylnaphthalenesulfonate/carboxylat e | 1.00 | Anticorrosive |
| Octyl 3-[3,5-di(t-butyl)-4-hydroxyphenyl]propanoate | 0.50 | Antioxidant |
| Stoddard solvent | 29.7 3 | Solvent |

### Mixture 11

| **Component** | **%** | **Role** |
|---|---|---|
| Mineral oil (group 1) | 11.2 8 | Lubricant |
| Overbased calcium sulfonate | 25.7 1 | Lubricant/anticorrosion/ thickener |
| 50 % Medium urethane alkyd in linseed oil solution | 23.4 0 | Fast drying binder |
| Magnesium dinonylnaphthalenesulfonate/carboxylat e | 1.00 | Anticorrosive |
| Octyl 3-[3,5-di(t-butyl)-4-hydroxyphenyl]propanoate | 0.50 | Antioxidant |
| Ethyl acetate | 19.1 1 | Solvent |
| Stoddard solvent | 19.0 0 | Solvent |

### Mixture 12

| **Component** | **%** | **Role** |
|---|---|---|
| Mineral oil (group 1) | 11.2 8 | Lubricant |
| Overbased calcium sulfonate | 25.7 1 | Lubricant/anticorrosion/ thickener |
| 50 % Medium urethane alkyd in linseed oil solution | 23.4 0 | Fast drying binder |
| 6 % Manganese octoate | 0.06 | Drying agent |
| Magnesium dinonylnaphthalenesulfonate/carboxylat e | 1.00 | Anticorrosive |
| Octyl 3-[3,5-di(t-butyl)-4-hydroxyphenyl]propanoate | 0.50 | Antioxidant |
| Ethyl acetate | 19.0 3 | Solvent |
| Stoddard solvent | 19.0 2 | Solvent |

### Mixture 13

| **Component** | **%** | **Role** |
|---|---|---|
| Mineral oil (group 1) | 11.88 | Lubricant |
| Overbased calcium sulfonate | 25.71 | Lubricant/anticorrosion/ thickener |
| 50 % Medium urethane alkyd in linseed oil solution | 31.18 | Fast drying binder |
| Hydrogenated microcrystalline wax | 4.50 | Lubricant. Corrosion protection |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Ethyl acetate | 12.61 | Solvent |
| Stoddard solvent | 12.62 | Solvent |

### Mixture 14

| **Component** | **%** | **Role** |
|---|---|---|
| Mineral oil (group 1) | 11.88 | Lubricant |
| Overbased calcium sulfonate | 25.71 | Lubricant/anticorrosion/ thickener |
| 50 % Medium urethane alkyd in linseed oil solution | 31.18 | Fast drying binder |
| Hydrogenated microcrystalline wax | 4.50 | Lubricant. Corrosion protection |
| Magnesium dinonylnaphthalenesulfonate/carboxylate | 1.00 | Anticorrosive |
| Octyl 3-[3,5-di(t-butyl)-4-hydroxyphenyl]propanoate | 0.50 | Antioxidant |
| Stoddard solvent | 25.23 | Solvent |

Various additives were added to each of the mixtures 1-14 to provide a coating composition having the following components:

| Component | % | Role |
|---|---|---|
| One of Mixtures 1-14 | 66.00 | When dried: semi-solid matrix, anticorrosive and lubricant |
| Copper flakes | 9.17 | Anti galling, tribology control, sealant (damming particle) |
| Talc | 4.14 | Anti galling, tribology control, sealant (damming particle) |
| Natural graphite | 10.06 | Anti galling, dry lubricant, tribology control, sealant (damming particle) |
| Calcium carbonate | 3.54 | Friction / heat control |
| Calcium sulfate | 0.71 | Mineral additive |
| TiO₂ | 0.38 | Mineral additive |
| Rubber particles | 6.00 | Main sealant, tribology control |

Particle size distributions of some of the additives are listed below:

| Filler | D10 / µm | D50 / µm | D90 / µm |
|---|---|---|---|
| Copper | 9 | 30 | 117 |
| Natural Graphite mesh 325 | 6.9 | 46.1 | 104.0 |
| Talc | 2.7 | 7.6 | 22.3 |
| Calcium carbonate | 2 | 6 | 15 |
| Calcium sulphate | 7 | 32 | 71 |

### Testing

Tests have been carried out to assess the effect of various additives on both sealing and over-torque capacity. As mentioned above, over-torque capacity can be measured as the magnitude of the range above the optimum make-up torque in which the threaded connection behaves without significant plastic deformation. As this condition is usually difficult to detect on a make-up chart, yield torque is typically evaluated experimentally. Over-torque capacity tests may apply an increasing torque on a threaded connection in order to see how far beyond the optimal make-up torque the first signs of significant plastic deformation appear and consequently registering the yield torque for each test run. Sealing tests, known in the art, may be performed to indicate whether sufficient gas tightness can be created using the grease.

In the field, yield torque can be readily identified in the make-up torque-vs-turn charts by a pronounced decrease in the slope near the end of the make-up process with increasing torque. In the experiment, a commercially-available reference grease was used to lubricate the threads of a threaded connection (having no metal-to-metal seal) and over-torque capacity tests and sealing tests carried out. This provided a baseline for the comparison of the reference grease with the above-described matrix having different additives added. The additives to be compared were PTFE, PET, PPS, PEEK, and rubber. The additives were provided as particles, with each additive having a similar size. Under commercial conditions, it is considered reasonably difficult to control the amount of grease/coating, which may result in an unintended excess. Therefore, all the over-torque capacity tests were executed applying an excess of grease/coating, with a reduction on the over-torque capacity. Both the reference grease and the coating containing matrix with elastomer were also tested using an optimum amount of coating/grease.

The results of the experiments are presented as a ratio between the tested product result and the reference grease result, this indicating how much better (or worse) is the resultant capacity compared to the reference.

As can be seen from the results below, the commercially-available reference grease provided a good over-torque capacity, but was unable to provide a high level of gas tightness. All of the additives, in combination with the matrix, improved gas tightness to such an extent that the maximum pressure value of the testing equipment was achieved. However, the provision of most of the additives had a deleterious effect on over-torque capacity. Surprisingly, the use of an elastomer/rubber additive, not only achieved the highest level of gas sealing, but also improved over-torque capacity beyond that of the commercially-available reference grease.

| | **Yield torque** | | **Gas tightness on Thread** | |
|---|---|---|---|---|
| | **Condition** | **Ratio vs Reference** | **Condition** | **Ratio vs Reference** |
| **Reference grease** | **Excess** | 1.00 | Normal | 1.00 |
| | Optimum | 1.14 | | |
| Matrix w/PTFE | Excess | 0.90 | Normal | 2.36 |
| Matrix w/PET | Excess | 0.98 | Normal | 2.36 |
| Matrix w/PPS | Excess | 0.98 | Normal | 2.36 |
| Matrix w/PEEK | Excess | 1.01 | Normal | 2.36 |
| Matrix w/Elastomer | Excess | 1.08 | Normal | 2.36 |
| | Optimum | 1.20 | | |

It is important to note that the ratio of 1.20 of over-torque capacity tests indicates the limit of the testing equipment. As it can be seen from figure 3, the connection has not yet reached the maximum level of plastic deformation (the slope is still positive), indicating there might be some remaining torque capacity. For the sealing tests a ratio of 2.36 also indicates the limit of the testing equipment.

Where certain standards are mentioned herein, such as ASTM standards, it should be understood that the standard referred to is the most up-to-date standard at the date of this application, unless otherwise specified.

The invention will now be further described with reference to the following numbered clauses:
1. A tubular member having a pin or box with a thread formed thereon for forming a threaded connection with another tubular member, wherein:
   the thread is coated with a coating;
   the coating comprises a polymeric matrix having particles of an elastomer dispersed therein;
   the elastomer has a tensile modulus at 100% of from 0.2 to 21 MPa; and
   the elastomer has a dynamic coefficient of friction of greater than 0.2.
2. The tubular member according to clause 1, wherein the elastomer comprises a rubber.
3. The tubular member according to clause 1 or clause 2, wherein the elastomer has a tensile modulus at 100% of from 1 to 15 MPa, preferably from 2 to 11 MPa.
4. The tubular member according to any preceding clause, wherein the elastomer has a dynamic coefficient of friction of from 0.2 to 2, preferably from 0.5 to 2, more preferably from 0.6 to 2, even more preferably from 0.7 to 1.5, still even more preferably from 0.8 to 1.2
5. The tubular member according to any preceding clause, wherein the elastomer has a tensile strength of from 1 to 28 MPa, preferably from 2 to 27 MPa, more preferably from 3 to 25 MPa.
6. A tubular member having a pin or box with a thread formed thereon for forming a threaded connection with another tubular member, wherein the thread is coated, wherein the coating comprises a polymeric matrix having rubber particles dispersed therein.
7. The tubular member according to clause 2 or clause 6, wherein the rubber comprises one or more of: natural rubber, silicone rubber, synthetic polyisoprene rubber, polybutadiene rubber and styrene butadiene rubber, preferably styrene butadiene rubber, and preferably wherein the rubber comprises cross-linked rubber.
8. The tubular member according to clause 2, 6 or 7, wherein the rubber particles comprise crumb rubber.
9. The tubular member according to any preceding clause, wherein the elastomer or rubber particles have a particle size distribution comprising:
   a D10 of 50 µm or more, preferably 100 µm or more, more preferably 125 µm or more, even more preferably 150 µm or more; and/or
   a D90 of 750 µm or less, preferably 500 µm or less, more preferably 450 µm or less, even more preferably 425 µm or less.
10. The tubular member according to any preceding clause, wherein the coating comprises from 1 to 20 wt.% of the elastomer or rubber particles, based on the total weight of the coating, preferably from 2 to 15 wt.%, more preferably from 4 to 10 wt.%.
11. The tubular member according to any preceding clause, wherein the polymeric matrix comprises oxidatively cross-linked polyesters of fatty acids, preferably oxidatively cross-linked glycerol esters of fatty acids, more preferably oxidatively cross-linked glycerol esters of polyunsaturated fatty acids.
12. The tubular member according to clause 11, wherein the coating comprises from 5 to 20 wt.% of the oxidatively cross-linked polyesters of fatty acids based on the total weight of the coating, preferably from 7 to 15 wt.%, more preferably from 8 to 12 wt.%.
13. The tubular member according to any preceding clause, wherein the polymeric matrix comprises oxidatively cross-linked drying oil or oxidatively cross-linked alkyd, preferably oxidatively cross-linked drying oil.
14. The tubular member according to any clause 13, wherein the drying oil comprises linseed stand oil.
15. The tubular member according to clause 13 or clause 14, wherein the coating comprises from 5 to 20 wt.% of the oxidatively cross-linked drying oil or oxidatively cross-linked alkyd based on the total weight of the coating preferably from 7 to 15 wt.%, more preferably from 8 to 12 wt.%.
16. The tubular member of any preceding clause, wherein the coating further comprises mineral oil dispersed in the polymeric matrix.
17. The tubular member of clause 16, wherein the mineral oil comprises base oil, preferably Group I base oil.
18. The tubular member of clause 16 or clause 17, wherein the coating comprises from 3 to 17 wt.% mineral oil, based on the total weight of the coating, preferably from 5 to 14 wt.%, more preferably from 6 to 10 wt.%.
19. The tubular member of any preceding clause, wherein the coating further comprises a detergent-based lubricant dispersed in the polymeric matrix.
20. The tubular member of clause 19, wherein the coating comprises from 10 to 45 wt.% of the detergent-based lubricant based on the total weight of the coating, more preferably from 11 to 40 wt.%, even more preferably from 12 to 35 wt.%, still more preferably from 13 to 30 wt.%, yet still more preferably from 18 to 28 wt.%.
21. The tubular member of clause 19 or clause 20, wherein the detergent-based lubricant comprises an overbased detergent, preferably an overbased sulfonate.
22. The tubular member according to any preceding clause, wherein the coating further comprises a binder comprising one or more of an epoxy resin, a C20-40 compound comprising a plurality of amine groups and a plurality of ester groups, a petroleum resin, a styrene acrylate polymer, and a urethane alkyd.
23. The tubular member according to clause 22, wherein the coating comprises from 5 to 40 wt.% of the binder based on the total weight of the coating.
24. The tubular member according to any preceding clause, wherein the coating further comprises petroleum resin, preferably petroleum C9 resin.
25. The tubular member according to clause 24, wherein the coating comprises from 5 to 20 wt.% of the petroleum resin based on the total weight of the coating preferably from 7 to 15 wt.%, more preferably from 8 to 12 wt.%.
26. The tubular member according to any preceding clause, wherein the coating further comprises copper particles dispersed in the polymeric matrix, preferably wherein the copper particles comprise copper flakes.
27. The tubular member according to clause 26, wherein the coating comprises from 1 to 20 wt.% copper particles based on the total weight of the coating, preferably from 5 to 15 wt.% copper particles.
28. The tubular member according to clause 26 or clause 27, wherein the copper particles exhibit a particle size distribution comprising:
   a D10 of from 5 to 15 µm; and/or
   a D50 of from 20 to 40 µm; and/or
   a D90 of from 100 to 140 µm.
29. The tubular member according to any preceding clause, wherein the coating further comprises talc dispersed in the polymeric matrix.
30. The tubular member according to clause 29, wherein the coating comprises from 1 to 10 wt.% talc based on the total weight of the coating, preferably from 3 to 8 wt.%.
31. The tubular member according to clause 29 or clause 30, wherein the talc exhibits a particle size distribution comprising:
   a D10 of from 1 to 5 µm; and/or
   a D50 of from 5 to 10 µm; and/or
   a D90 of from 15 to 25 µm.
32. The tubular member according to any preceding clause, wherein the coating further comprises graphite particles dispersed in the polymeric matrix.
33. The tubular member according to clause 32, wherein the coating comprises from 1 to 20 wt.% of the graphite particles based on the total weight of the coating, preferably from 5 to 15 wt.% of the graphite particles.
34. The tubular member according to clause 32 or clause 33, wherein the graphite particles exhibit a particle size distribution comprising:
   a D10 of from 2 to 12 µm; and/or
   a D50 of from 35 to 55 µm; and/or
   a D90 of from 90 to 120 µm.
35. The tubular member according to any preceding clause, wherein the coating further comprises calcium carbonate particles.
36. The tubular member according to clause 35, wherein the coating comprises from 1 to 7 wt.% of the calcium carbonate particles, preferably from 2 to 6 wt.%.
37. The tubular member according to clause 35 or clause 36, wherein the calcium carbonate particles exhibit a particle size distribution comprising:
   a D10 of from 0.1 to 3 µm; and/or
   a D50 of from 4 to 10 µm; and/or
   a D90 of from 11 to 20 µm.
38. The tubular member according to any preceding clause, wherein the coating further comprises:
   calcium sulfate, preferably from 0.1 to 2 wt.% calcium sulfate based on the total weight of the coating, more preferably from 0.4 to 1.2 wt.%; and/or
   titanium dioxide, preferably from 0.1 to 1 wt.% titanium dioxide based on the total weight of the coating, more preferably from 0.2 to 0.7 wt.%; and/or
   an antioxidant, preferably from 0.1 to 1.5 wt.% of the antioxidant based on the total weight of the coating; and/or
   an anticorrosive agent, preferably from 0.4 to 1 wt.% of the anticorrosive agent based on the total weight of the coating; and/or
   a wax-based lubricant, preferably microcrystalline wax, preferably from 2 to 10 wt.% wax-based lubricant.
39. A coating composition for coating a tubular member thread, the coating composition comprising:
   particles of an elastomer, wherein the elastomer has a tensile modulus at 100% of from 0.2 to 21 MPa and a dynamic coefficient of friction of greater than 0.2;
   monomers;
   drying agent;
   mineral oil; and
   solvent.
40. A coating composition for coating a tubular member thread, the coating composition comprising:
   rubber particles;
   monomers;
   drying agent;
   mineral oil; and
   solvent.
41. The coating composition of clause 39 or clause 40, wherein:
   the elastomer or rubber comprises one or more of: natural rubber, synthetic polyisoprene, polybutadiene rubber and styrene butadiene rubber, preferably styrene butadiene rubber; and/or
   the monomers comprise glycerol esters of polyunsaturated fatty acids, preferably having an iodine value of at least 115, more preferably at least 120, even more preferably at least 125, still even more preferably at least 130; and/or
   the monomers comprise drying oil or alkyd; and/or
   the drying agent comprises metal octoate, preferably one or more of manganese octoate, zirconium octoate, calcium octoate and cobalt octoate; and/or
   the mineral oil comprises base oil, preferably Group I base oil; and/or the solvent comprises white spirit, preferably Stoddard solvent.
42. The coating composition of any of clauses 39 to 41, comprising:
   from 1 to 20 wt.% of the elastomer or rubber particles, based on the total weight of the composition, preferably from 2 to 15 wt.%, more preferably from 4 to 10 wt.%:
   from 5 to 25 wt.% monomers, based on the total weight of the composition, preferably from 10 to 20 wt.%; and/or
   from 0.1 to 1.5 wt.% drying agent, based on the total weight of the composition, preferably from 0.4 to 0.8 wt.%; and/or
   from 5 to 25 wt.% mineral oil, based on the total weight of the composition, preferably from 8 to 20 wt.%, more preferably from 10 to 15 wt.%; and/or
   from 2 to 30 wt.% solvent, based on the total weight of the composition, preferably from 5 to 25 wt.%, more preferably from 10 to 20 wt.%.
43. The coating composition of any of clauses 39 to 42, further comprising one or more of:
   copper particles, preferably from 1 to 20 wt.% copper particles based on the total weight of the composition, more preferably from 5 to 15 wt.% copper particles;
   talc, preferably from 1 to 10 wt.% talc based on the total weight of the composition, more preferably from 2 to 6 wt.%;
   graphite particles, preferably from 1 to 20 wt.% graphite particles based on the total weight of the composition, more preferably from 5 to 15 wt.% graphite particles;
   an anticorrosive agent, preferably from 0.2 to 1 wt.% anticorrosive agent based on the total weight of the composition;
   an antioxidant, preferably from 0.1 to 0.5 wt.% antioxidant based on the total weight of the composition;
   a detergent based lubricant, preferably an overbased sulfonate, preferably from 15 to 25 wt.% detergent-based lubricant, based on the total weight of the composition, more preferably from 20 to 30 wt.%; and
   a wax-based lubricant, preferably microcrystalline paraffin, preferably from 2 to 10 wt.% wax-based lubricant based on the total weight of the composition.
44. A tubular member having a pin or box with a thread formed thereon for forming a threaded connection with another tubular member, wherein the thread is coated with a coating composition of any of clauses 39 to 43 disposed thereon.
45. A method of manufacturing the tubular member of any of clauses 1 to 38, the method comprising:
   providing a tubular member having a thread;
   providing a coating by disposing the coating composition of any of clauses 40 to 44 on the thread; and
   exposing the coating to an oxygen-containing atmosphere, preferably air.
46. The method of clause 45, wherein:
   providing a tubular member having a thread comprises cutting a thread onto at least one end portion of the tubular member in a factory; and
   the step of providing a coating takes place in the factory.
47. The method of clause 45 or 46, further comprising enclosing the coated thread with a thread protector.
48. A tubular member manufactured according to the method of any of clauses 45 to 47.
49. A threaded connection comprising a first tubular member having a pin a second tubular member having a box, wherein:
   the pin is an end portion of the first tubular member and comprises on its radially outward-facing surface a male thread;
   the box is an end portion of the second tubular member and comprises on its radially inward-facing surface a female thread;
   the male thread and female thread are configured to engage with each other when the joint is in a made-up state;
   wherein at least one of the male and female threads is coated with the coating of any of clauses 39 to 43.
50. The threaded connection of clause 49, wherein the male and female threads are varying-width threads.
51. The threaded connection of clause 49 or clause 50, wherein the male and female threads are free-running threads.
52. The threaded connection of any one of clauses 49 to 51, wherein the pin and box comprise complementary torque shoulders configured for mutual abutment when the connection is made-up.
53. The threaded connection of any one of clauses 49 to 52, wherein the pin and box comprise complementary annular sealing surfaces configured to form a seal by radial interference therebetween when the connection is in the made-up state.
54. The threaded connection of any one of clauses 49 to 53, wherein the pin and box do not include any complementary annular sealing surfaces that form a seal by radial interference therebetween when the connection is in the made-up state.

The foregoing detailed description has been provided by way of explanation and illustration and is not intended to limit the scope of the appended claims. Many variations in the presently preferred embodiments illustrated herein will be apparent to one of ordinary skill in the art, and remain within the scope of the appended claims and their equivalents.

## Claims

1. A tubular member having a pin or box with a thread formed thereon for forming a threaded connection with another tubular member, wherein:
the thread is coated with a coating;
the coating comprises a polymeric matrix having particles of an elastomer dispersed therein;
the elastomer has a tensile modulus at 100% of from 0.2 to 21 MPa; and
the elastomer has a dynamic coefficient of friction of greater than 0.2.

2. The tubular member according to claim 1, wherein the elastomer comprises a rubber.

3. The tubular member according to any claim 1 or claim 2, wherein the elastomer has:
a dynamic coefficient of friction of from 0.2 to 2, preferably from 0.5 to 2, more preferably from 0.6 to 2, even more preferably from 0.7 to 1.5, still even more preferably from 0.8 to 1.2; and/or
a tensile strength of from 1 to 28 MPa, preferably from 2 to 27 MPa, more preferably from 3 to 25 MPa; and/or
a tensile modulus at 100% of from 1 to 15 MPa, preferably from 2 to 11 MPa.

4. A tubular member having a pin or box with a thread formed thereon for forming a threaded connection with another tubular member, wherein the thread is coated, wherein the coating comprises a polymeric matrix having rubber particles dispersed therein.

5. The tubular member according to any preceding claim, wherein the elastomer or rubber particles have a particle size distribution comprising:
a D10 of 50 µm or more, preferably 100 µm or more, more preferably 125 µm or more, even more preferably 150 µm or more; and/or
a D90 of 750 µm or less, preferably 500 µm or less, more preferably 450 µm or less, even more preferably 425 µm or less.

6. The tubular member according to any preceding claim, wherein the coating comprises from 1 to 20 wt.% of the elastomer or rubber particles, based on the total weight of the coating, preferably from 2 to 15 wt.%, more preferably from 4 to 10 wt.%.

7. The tubular member according to any preceding claim, wherein the polymeric matrix comprises oxidatively cross-linked drying oil or oxidatively cross-linked alkyd, preferably oxidatively cross-linked drying oil, preferably wherein the coating comprises from 5 to 20 wt.% of the oxidatively cross-linked drying oil or oxidatively cross-linked alkyd based on the total weight of the coating preferably from 7 to 15 wt.%, more preferably from 8 to 12 wt.%.

8. The tubular member of any preceding claim, wherein the coating further comprises mineral oil dispersed in the polymeric matrix, preferably from 3 to 17 wt.% mineral oil, based on the total weight of the coating, more preferably from 5 to 14 wt.%, even more preferably from 6 to 10 wt.%.

9. The tubular member of any preceding claim, wherein the coating further comprises a detergent-based lubricant dispersed in the polymeric matrix, preferably wherein the detergent-based lubricant comprises an overbased detergent, more preferably an overbased sulfonate.

10. The tubular member according to any preceding claim, wherein the coating further comprises copper particles dispersed in the polymeric matrix, preferably from 1 to 20 wt.% copper particles based on the total weight of the coating, more preferably from 5 to 15 wt.% copper particles.

11. The tubular member according to any preceding claim, wherein the coating further comprises graphite particles dispersed in the polymeric matrix, preferably from 1 to 20 wt.% of the graphite particles based on the total weight of the coating, more preferably from 5 to 15 wt.% of the graphite particles.

12. The tubular member according to any preceding claim, wherein the coating further comprises calcium carbonate particles dispersed in the polymeric matrix, preferably from 1 to 7 wt.% of the calcium carbonate particles based on the total weight of the coating, more preferably from 2 to 6 wt.%.

13. A coating composition for coating a tubular member thread, the coating composition comprising:
particles of an elastomer, wherein the elastomer has a tensile modulus at 100% of from 0.2 to 21 MPa and a dynamic coefficient of friction of greater than 0.2;
monomers;
drying agent;
mineral oil; and
solvent.

14. A coating composition for coating a tubular member thread, the coating composition comprising:
rubber particles;
monomers;
drying agent;
mineral oil; and
solvent.

15. A tubular member having a pin or box with a thread formed thereon for forming a threaded connection with another tubular member, wherein the thread is coated with a coating composition of claim 12 or claim 13 disposed thereon.

16. A method of manufacturing the tubular member of any of claims 1 to 12, the method comprising:
providing a tubular member having a thread;
providing a coating by disposing the coating composition of claim 12 or claim 13 on the thread; and
exposing the coating to an oxygen-containing atmosphere, preferably air.
